# EUROPEAN PATENT SPECIFICATION

(11) **EP 1 361 671 B1**
(45) Date of publication and mention of the grant of the patent: **21.11.2007**
(21) Application number: 02405374.6
(22) Date of filing: 07.05.2002
(51) Int. Cl.: H04B 3/52

(54) **Microwave waveguide bus for digital devices**
Mikrowellenleiterbus für digitale Vorrichtungen
Bus par guide de micro-ondes pour des dispositifs numériques

(43) Date of publication of application: 12.11.2003
(73) Proprietor: ABB RESEARCH LTD., 8050 Zürich (CH)
(72) Inventor: Lehmann, Josef, 79761 Waldshut-tiengen (DE); Rudolf, Paul, 5234 Villigen (CH); Zurfluh, Franz, 5200 Brugg (CH); Stanimirov, Michael, 5400 Baden (CH)
(74) Representative: ABB Patent Attorneys

(56) References cited:
- EP-A- 1 239 600
- WO-A-94/14252

## Description

### TECHNICAL FIELD

The invention refers to the field of data communication between digital equipment. The invention relates to a communication bus for a digital device and to a network or digital device comprising a communication bus according to the preamble of the independent claims.

### BACKGROUND OF THE INVENTION

Various approaches are known to provide data channels to and from planar integrated circuits (ICs), such as microwave integrated circuits (MICs) or monolithic microwave integrated circuits (MMICs). Typically ICs have input and output paths in the form of microstrip lines. In the article by D. Deslandes and K. Wu, "Integrated Microstrip and Rectangular Waveguide in Planar Form", IEEE Microwave and Wireless Components Letters, Vol. 11, No. 1, Februar 2001, a waveguide data channel is immediately integrated into an IC by providing a tapered transition zone between a microstrip line of the IC and a rectangular waveguide for further data transmission. The taper is designed to transform the quasi-TEM mode of the microstrip line into the TE₁₀ mode in the waveguide. Thus passive waveguide components can be integrated into active IC circuits. The signals do not need any signal conditioning for being coupled into the low-loss, high data rate waveguide structure. However, only point to point connections are feasible and tightest dimensional requirements must be fulfilled in order to produce tapered zones with acceptable insertion losses into the microwave waveguide.

Current computer designs comprise dedicated processors or components interconnected via conductors that are arranged on a printed circuit board (PCB) or multilayer board (MLB). Ordinary transmission lines on PCBs or MLBs are operated in the TEM mode. This mode always works as a low pass filter, with the effect that the attenuation and mode cross-coupling are increased for increasing frequencies. Conventional electrical bus-systems provide limited data rates of approximately 400 Mbps per line for conductor lines below 250 nm. Alternative point-to-point connections for high-speed signal transmission on PCBs or MLBs are matched lines, such as microstrip lines working in a quasi-TEM mode and coaxial-type conductors, or fiber-optic cables. A major disadvantage of electrical transmission lines in the TEM or quasi-TEM mode is the fact that it is impossible to achieve high data rates with frequency multiplexing over long distances. Bus-systems based on matched lines or fiber optics need exceptionally precise mechanical alignment, must be handled with great care and provide point-to-point connections only.

In the EP 1 096 596 microwave waveguides and backplane systems for printed circuit boards (PCB) or multilayer boards (MLB) are disclosed. A backplane system is built by connecting the waveguide to an outer surface of the PCB or MLB or mounting the waveguide as a layer in an inner portion of the MLB and by mounting transmitters and receivers or transceivers, respectively, fixedly on the waveguide. Both air-filled and nonradiative dielectric waveguides with rectangular cross sections are proposed. A suitable choice of transceivers are broadband microwave modems. Parallel access is achieved by building a backplane with an array of waveguides which provide a plurality of independent data channels. The waveguides are accessible in parallel and are arranged with sufficient spacing to suppress cross-talk. Obviously, such a waveguide array does not provide interconnectivity between microwave terminals or transceivers located in different waveguides. Rather, communication is confined to those terminals that are connected to the same waveguide.

Known topologies of communication buses are star, ring and bus structures. Star topologies are most commonly used for configuring communication systems, such as the public switched telephone network (PSTN) or high-speed bus systems. The star topology is easily implementable in fiber-optic networks and allows a proper termination of every transmission line without signal distortion. However, signal switching, signal synchronization and fault location are difficult in a star-coupled communication network.

In ring topologies telegrams are stored and forwarded such that at most one telegram per segment is transmitted at a time. Thus, the data rate is reduced and the complexity of network management is increased.

Bus-like topologies allow a parallel data access. Every participant receives the same data with a certain signal propagation delay. However, the parallel access requires an arbitration of the waveguide medium among the participants. This may be done by time multiplexing signals in a single waveguide or by space multiplexing signals in multiple waveguides connecting the participants in parallel. Fiber optic components provide the largest bandwidth presently available. However, bus-like fiber optic structures are very difficult to achieve with reasonable effort and it is costly and complex to provide multiple access in fiber optic buses.

In the WO 94/14252 a waveguide transmission system for interference-free high data rate in-house communication is disclosed. Hollow-type rectangular waveguides suitable for microwave signal transmission in a broad frequency range equipped with independent external RF transceivers for coupling microwave signals to the waveguide are proposed. The coupling is effected via microstrip-to-waveguide transitions, RF-probe-to-waveguide transitions or aperture-coupled transitions. The external or stand-alone transceivers include each a microwave detector and oscillator, other components, such as an amplifier, a pulse modulator or a data squelch, and a controller. Data transmission over the waveguide is effected by on/off-keying, i. e. binary encoding or baseband modulation. When time domain multiplexing is used, various differential path delays occur owing to reflections from side walls, insufficient waveguide terminations, antennas or from other imperfections in the waveguide. Therefore, elaborate electronic signal processing, such as time domain equalization, spread spectrum or code division multiplexing or sectorized antenna selectivity, is needed when multiple parallel data channels with reasonable data rates over longer distances shall be achieved in the waveguide. The transceiver controller is connected via a further independent bus system to user devices such as a personal computer, a telephone or any other peripheral device. The waveguide structure is primarily chosen to overcome radio interference problems in in-house communication.

The invention refers to the state of the art disclosed in EP 1 239 600 A1. There is disclosed a radio-wave communication system using a waveguide in order to establish a communication bus in a substation between the substation control unit and the control units of bay elements. The guided radio waves are well protected against interference and can be transmitted with high intensity due to only little leakage from the waveguide to the substation environment.

### BRIEF SUMMARY OF THE INVENTION

It is a general object of the invention to provide a communication bus for transmitting microwave signals in a waveguide between digital data processing units, wherein a simplified handling and mountability of bus components and a flexible extensibility of the number of bus participants are realized. This object is achieved according to the invention by the subject-matter as set forth in the independent claims.

In a first aspect the invention consists in a communication bus for transmitting microwave signals, comprising a microwave waveguide linking digital data processing units, wherein each processing unit is connected to microwave transceiving means for coupling microwave signals into and out of the waveguide, wherein further each transceiving means comprises a microwave modulator and demodulator and an antenna, that are in one piece with the respective processing unit, and the waveguide is provided with receiving means for receiving the processing units such that their antennas are coupled to the waveguide, wherein further the data traffic on the waveguide bus is managed by microwave signal management means and the microwave signal management means are implemented in a separate network management unit or are integrated in a processing unit. Transceiving means signify an emitter, receiver or transceiver for microwave signals. Major advantages are that (i) the transceiving means do not belong to the waveguide, but rather each transceiving means is an integral part of its corresponding processing unit and that (ii) the antenna provides an immediate microwave access of each processing unit to the waveguide. Thus the units are simple to mount and demount on the waveguide without compromising the quality of radio communication through the waveguide. The microwave waveguide bus is particularly useful for high data rate backplanes connecting digital processors of arbitrary type and size. The waveguide dimensions are to be adjusted depending on the range of transmission frequencies and on the space available for the waveguide. By providing receiving means for the processing units, such as slots, rails or the like, a flexible number of participants can be connected to the bus with ease. The receiving means may be adapted for receiving the antenna, connector pins or any other mounting feet of the processing units.

In first embodiments the handling of bus components is further simplified and the flexibility of bus design is further increased by (i) providing pluggable processing units, (ii) by integrating the microwave oscillator and demodulator directly in each processing unit and/or (iii) by providing receiving means with discrete or continuously distributed locations along the waveguide. This allows for a multi-point or continuous parallel access to the waveguide bus.

Second embodiments comprise (i) a stick-like antenna design for easy antenna insertion into the waveguide, (ii) an antenna mismatch for leaving sufficient energy in the microwave for parallel access capability, and/or (iii) a single antenna or a small number of antennas per processing units for providing a very much simplified interface of the processing unit compared to conventional multi-pin electrical connectors.

The embodiments according to claim 5 have the advantages that the transceiving means comprise analogue-to-digital converter and RF modulation means for generating and demodulating high frequency or broadband microwave signals and that standard microwave waveguides may be chosen.

The embodiment according to claim 6 has the advantage that frequency multiplexing a plurality of microwave signals on the microwave waveguide is a powerful tool to provide different communication channels with parallel access on the common physical waveguide medium. Thus a multitude of communication participants are linked together over the waveguide bus and can be addressed and recognized selectively. Frequencies may be defined to specify signals and/or communication partners, such as pairs or groups of processing units. Frequency multiplexing on a waveguide requires that all frequencies must be chosen above the cut-off frequency of the fundamental waveguide mode and may be chosen within the frequency band of the same mode or different modes. Most advantageously the frequency multiplexing means comprise means for frequency planning or frequency network management in order to define frequency channels and bandswidths according to anticipated or currently determined communication requirements on the waveguide bus.

The embodiment according to claim 7 has the advantage that the signal transmission capacity of the waveguide can be fully exploited without compromising bandwidth needs of individual communication channels. Such bandwidth needs depend on limitations of the signal generating device, such as an access speed, e. g. of a random access memory (RAM), or of the signal processing device. They may as well depend on the type of transmitted signal. E. g. large bandwidths shall be allocated to fast address-data signals and small bandwidths to rather slow general-purpose signals, such as input/output signals or interrupt signals. The dynamic adaptation of bandwidth allocation allows an efficient bandwidth usage on the waveguide and a continuous or at least repeated matching of channel bandwidths to the actual bandwidth needs. If bandwidth is no longer needed additional frequency channels may be opened in intermediate frequency bands or existing frequency bands may be shifted to free frequency space.

The embodiment according to claim 8 has the advantage that even integrated circuit chips (IC-chips) arranged on minimal space inside a processing or memory module may be linked together via high-data-rate intra-module microwave waveguides. In particular, multi chip modules (MCMs), typically formed of silicium and gallium arsenide IC-chips, are suitable candidates for implementing intra-module waveguide interconnects or backplanes between the IC-chips.

The embodiment according to claim 9 has the advantage that integrated circuit chips (IC-chips) arranged on a common board, such as a printed circuit board (PCB) or multilayer board (MLB), can be linked together via high-data-rate on-board microwave waveguides. The common board may be a general purpose board, such as a mounting, wiring or communication board for various IC-chips. The on-board waveguide may be designed as a or be part of a board area network (BAN), and it may be implemented in the form of a PCB or MLB waveguide backplane.

The embodiment according to claim 10 has the advantage that processing modules, memory modules and/or peripheral devices can be linked together via high-data-rate inter-module or intra-computer microwave waveguides. Such modules may even be distributed along microwave waveguides bridging long distances, such as 100 m or more. The inter-module waveguide may be designed as or be part of a system area network (SAN).

The embodiment according to claim 11b has the advantage that a hierarchy or cascade of waveguide backplanes and, if desired, a direct coupling of microwave signals between waveguides in different backplane layers are feasible.

The embodiments according to claims 12 and 13 have the advantage that power supply or thermal cooling means comprise the waveguide as a power or heat transmission medium and thereby facilitate the power supply to and/or heat removal from the digital data processing units.

In a second aspect the invention relates to a data processing device comprising a communication bus as described above.

### BRIEF DESCRIPTION OF THE DRAWINGS

The invention will be better understood and objects other than those set forth above will become apparent when consideration is given to the following detailed description thereof. Such description makes reference to the annexed drawings, which are schematically showing in
- Fig. 1a: a current computer design with a conventional bus system;
- Fig. 1b: a conventional parallel bus system having a plurality of parallel wires;
- Fig. 2: a novel computer design (with enlarged inset) comprising a microwave communication bus according to invention;
- Fig. 3: a simplified top view, side view and front view of the novel computer design;
- Fig. 4: a frequency multiplexing operation of the novel microwave communication bus;
- Fig. 5: a novel computer design with a hierarchical microwave communication bus comprising multiple waveguiding layers;
- Fig. 6: a top view and partial side view of a PCB or microprocessor comprising a waveguide backplane for communication between IC-chips;
- Fig. 7: a side view of a modular personal computer comprising a mother board equipped with a waveguide backplane;
- Fig. 8: a side view of a digital data processing unit mounted on a waveguide or waveguide backplane;
- Fig. 9: a side view of a PCB-module with backplane and integrated waveguide for high speed transmission;
- Fig. 10: a perspective view of several PCB-modules mounted on a rack-based backplane with integrated waveguides;

In the drawings identical parts are designated by identical reference numerals.

### DETAILED DESCRIPTION OF THE INVENTION

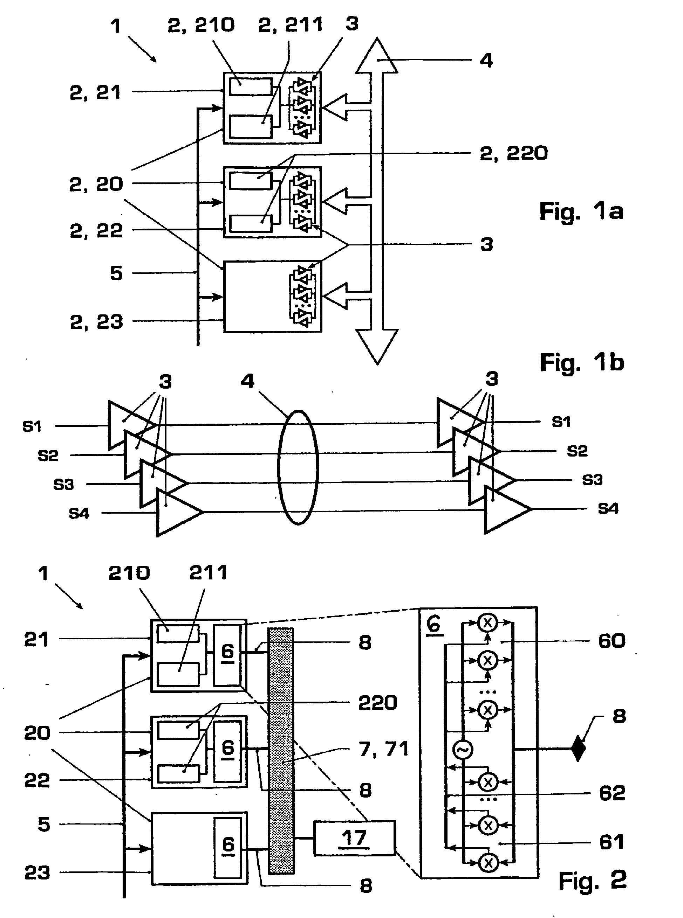

Fig. 1a displays a general form of current computer systems 1. The modular computer 1 comprises digital data processing units 2, such as subassemblies or cards 20, in particular a processor, microprocessor or central processing unit (CPU) 21, comprising e. g. an arithmetic logic unit (ALU) 210 and a cash memory 211, a memory module 22, comprising e. g. a RAM-chip 220, and a peripheral device 23, such as an input/output device 23 and in particular a keyboard, mouse, network interface, graphic interface, drive, storage device or other component 23. The processing units 2 are supplied with power via separate supply lines 5. The data traffic is handled over a conventional bus 4 that is accessed by the processing units 2 via conventional input/output buffers or bus drivers 3. The drivers 3 condition digital signals as baseband signals and perform the necessary impedance matching for signal coupling to the multiple-conductor bus 4.

Fig. 1b shows a conventional bus 4 which is typically formed by a plurality of conductor lines or microstrip lines each transmitting one signal S1, ..., S4 in parallel.

The data rate between the dedicated components 2 over conventional conductor lines 4 is limited to about 400 Mbps per line for a line width below 250 nm.

Fig. 2 shows a novel computer design 2 (partially enlarged) wherein the conventional bus 4 is replaced by one or several microwave waveguides 7. The processing units 2; 21; 210, 211; 22, 220; 23 are equipped with microwave transceiving means 6, such as emitter, receiver or transceiver 6, for transforming digital signals into broadband-modulated high frequency radio or microwave signals that are then coupled via antenna 8 to the on-board waveguide 71 for rapid transmission. The transceiver 6 (enlarged) comprises a microwave modulator 60, demodulator 61 and internal signaling lines 62. The antenna 8 may as well receive microwave signals from other processing units 2 and deliver them via the microwave demodulator 6 to its processing unit 2.

The data traffic on the waveguide bus 7 is managed by microwave signal management means 17 or multiplexing means 17, in particular frequency multiplexing means 17.

These means 17 may be implemented in a separate network management unit 17 or may be integrated in a processing unit 2, sub-assembly 20 or IC-chip 210, 211, 220.

These means 17 may be implemented using programmable software tools. Preferably the microwave waveguide 7 is a hollow metallic or nonradiative dielectric waveguide transmitting at least one TE- and/or TM-mode and has, in particular, a rectangular, round or coaxial cross section.

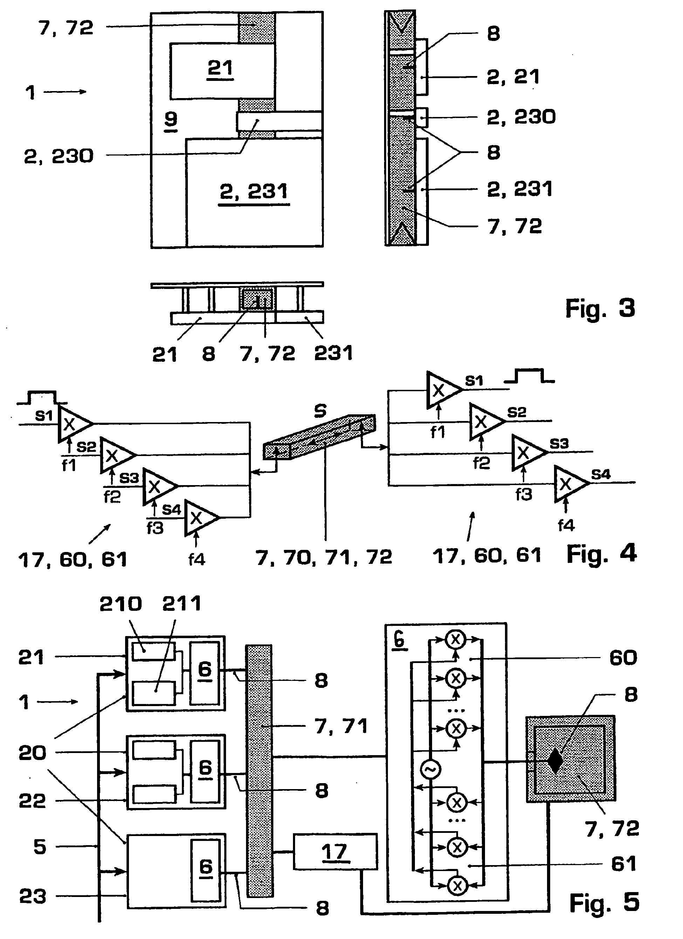

Fig. 3 shows a top, front and side view of a modular computer 1 on a mother board 9 which comprises an inter-module or intra-computer microwave waveguide 72 connecting a processor 21, an Ethernet card 230, a compact disc drive 231 and possibly other components (not shown). Every component 2 has its proper microwave antenna 8 which is inserted or plugged into the at least one waveguide 72. The waveguide 72 may be implemented as a backplane of the mother board 9. The waveguide or backplane 72 may comprise a network of interconnected waveguides 72 and form a system area network (SAN). The waveguide approach is very suitable for constructing modular computer systems 1, such as personal computers (PCs) or portable computers 1 using docking stations and exchangeable devices.

Fig. 4 shows a frequency multiplexing operation of the waveguide bus 7; 70, 71, 72. In the microwave oscillator or modulator 60 shown on the left the microwave signals S1, ... S4 are modulated onto high frequency carrier signals denoted by f1, ... f4, are added and coupled to the waveguide 7. The reverse process is performed on the receiver side by the microwave demodulator 61. Obviously the waveguide 7 is operable in both transmission directions by equipping both sides with a modulator 60 and receiver 61.

The frequency multiplexing means 17 allow to define independent communication channels within the same microwave waveguide 7. In particular, specific frequencies are allocated to specific signals S1, ... S4 and/or to specific transmitting and/or receiving processing units 2 and/or to specific groups of transmitting and receiving processing units 2. Preferably the frequency multiplexing means 17 comprise means for dynamic bandwidth allocation to individual communication channels as a function of a type of signal S1, ... S4 or a type of processing unit 2 associated with the communication channel. In particular, large bandwidths, preferably above 100 MHz, are allocated to address-data signals and small bandwidths, preferably below 100 MHz, more preferred below 1 MHz, are allocated to general-purpose signals.

The microwave bus allows transmission speeds of approximately 100 Gbps per waveguide and can bridge even very long distances, such as 100 m or more. Thus signal broadcast and very accurate synchronization is possible over considerable distances, and even the system synchronization clock can be sent via the waveguide bus 7 for synchronizing the complete delocalized computer system 1.

In principle any type of coherent or broadband signal modulation is feasible. The absence of electromagnetic perturbations in the waveguide 7 allows to achieve high data rates without complicated signal conditioning. For example, by using a 64 QAM (quadrature amplitude modulation) a spectral density of 64 bits/Hz can be reached and a bit rate of 64 Gbps can be transmitted in a stable spectral range of 1 GHz.

Fig. 5 shows a hierarchy or cascade of two microwave waveguides 71, 72. The on-board waveguide 71 interconnects a processor 21, memory module 22 and peripheral device 23, as described in the context of Fig. 2, and forms a board area network (BAN). The BAN is interfaced itself via a microwave modem 60, 61 and antenna 8 to an inter-module waveguide 72, the structure and operation of which has been explained in connection with Fig. 3. A multi-layered hierarchy of intra-module waveguides 70 (not shown) and/or on-board waveguides 71 and/or inter-module waveguides 72 is feasible, as well. The waveguide cascade 70, 71, 72 may comprise, in particular, direct waveguide links to transmit microwave signals S1, ... S4 immediately, i. e. without interposed microwave modems 60, 61, between different waveguide layers 70, 71; 71, 72; 70, 72.

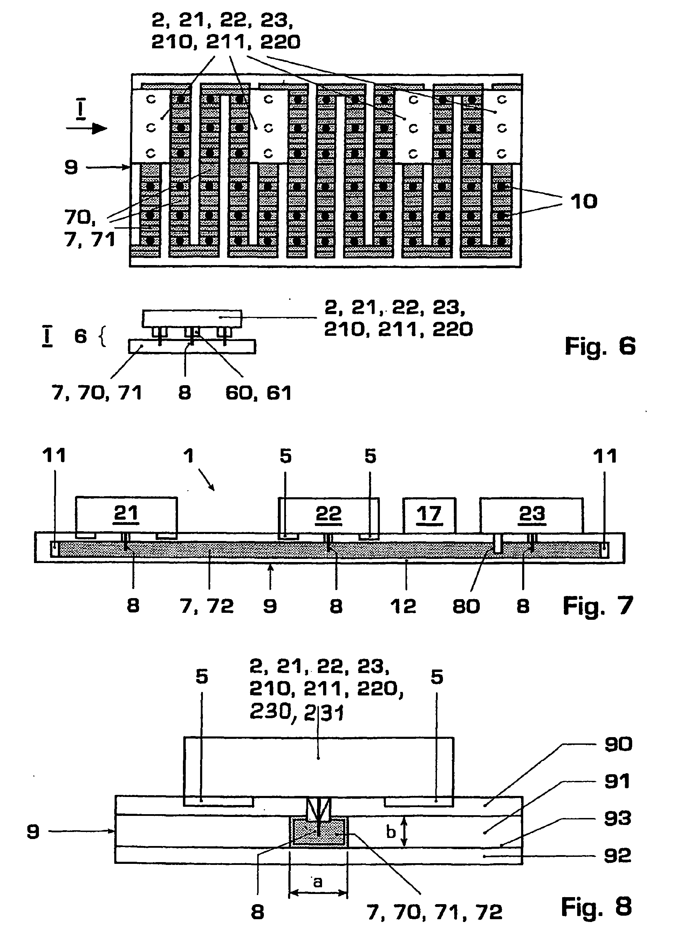

Fig. 6 shows a top and partial side view of a multi-chip microprocessor or multi-chip module 9 comprising an intra-module waveguide 70, preferably in form of a backplane 70. Examples could be an intra-multi-chip-processor waveguide backplane 70 or an intra-multi-chip-memory waveguide backplane 70. Every IC-chip 2; 21, 22, 23; 210, 211; 220 is connected via its own microwave transceiver or modem 60, 61 and antenna 8 to one or more waveguides 70. A prominent advantage of the novel microwave interface is the elimination of several hundred external connectors typically present in conventional IC-chips and, consequently, an enormous reduction of wiring or layout complexity inside the module 9 or on the PCB or MLB 9. Instead, the multiplexing of multiple channels on the common waveguide bus 7 (e. g. time or frequency multiplexing) is done much simpler by implementing appropriate communication bus software tools for network management. The IC-chips 2 are plugged into slots 10 provided in the waveguide 70 and extend their antenna or antennas 8 into the waveguide 70. The IC-chips 2 are electrically isolated against each other, and all processing units 2 sharing the same waveguide 70 can receive the same signals S1, ... S4 within the physical limitations of the bus 7, such as signal dispersion and multi-path radio reception. Note that in the whole application the term IC-chip shall signify any chip, which comprises an integrated circuit, and may be a general purpose IC, an arithmetic logic unit (ALU) 210, a central processing unit (CPU) 21, a cash memory 211, a random access memory (RAM) 220, an application specific integrated circuit (ASIC) or the like.

It is very favourable that the microwave interfaces between the IC-chips 2 and the waveguide 70 are not expensive optical connectors but rather simple metallic sticks representing antennas 8. Consequently, cleanliness and mounting precision of the microwave interface 8 are completely uncritical in the waveguide approach. It is emphasized that Fig. 6 can as well be read such that 9 signifies a PCB or MLB and 71 an on-board microwave waveguide, as explained previously.

Fig. 7 shows a side view of a modular personal computer 1 comprising a mother board 9 with a waveguide backplane 72. The waveguide 72 is equipped with microwave absorbing end caps 11 and with a layer 12 of microwave absorbing material, such as graphite, to avoid radiation leakage from the hollow waveguide 72.

Fig. 8 shows in greater detail a possible waveguide construction. The waveguide 70, 71 or 72 comprises, e. g., a top layer 90, a microwave layer 91 and a bottom layer 92. The microwave and bottom layer 91, 92 shall be separated by a metallic coating 93, preferably made of or comprising copper. The dimensions of the waveguide 7, in particular the width a and height b of a rectangular hollow waveguide 7, are chosen such that the desired cut-off frequency and the admissible size of the waveguide 7 are achieved. If the waveguide 7 is filled with a dielectric other than air and with a low loss angle the antenna design 8 shall be adapted accordingly.

Preferably power supply means (not shown) for the processing units 2 comprise the waveguide 7 as a power transmission medium. In particular the communication bus 7 comprises means for microwave power supply (not shown) through the waveguide 7 to the processing units 2 and the processing units 2 comprise antennas 8, 80 for extracting a suitable portion of the microwave power. The signal-transceiving antenna 8 and the power-receiving antenna 80 can be physically separated, wherein the signal antenna 8 shall be mismatched to all frequencies, in particular to the power transmission frequency, and the power antenna 80 shall be matched to the power transmission frequency. Alternatively the signal and power antenna 8, 80 can be combined in one antenna 8 which shall be mismatched to frequencies of information signals S1, ... S4 and matched to the frequency of the power signal. Alternatively to microwave power transmission the waveguide 7 can be metallic and can be designed to form part of a wire-bound power supply line.

Preferably thermal cooling means (not shown) for the processing units 2 comprise the waveguide 7 as a heat transmission medium. In particular, the waveguide 7 is metallic and is thermally connected to the processing units 2 and to a heat sink (not shown).

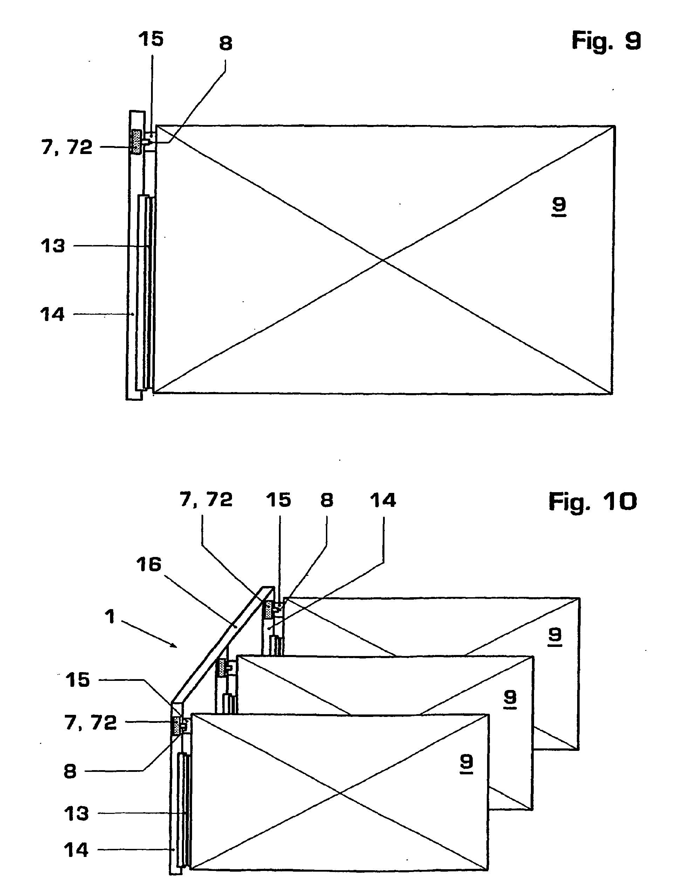

Fig. 9 shows a backplane 14 for a PCB or MLB 9 interfaced by a conventional N-pole connector 13. In a addition, or possibly alternatively, the backplane 9 is equipped with an inter-module microwave waveguide 72 and the PCB 9 has the above described microwave interface 8, 15 comprising a waveguide connector 15 and the at least one antenna 8. As well, the PCB 9 may itself comprise an on-board waveguide bus 71 (not shown) which may be coupled directly to the inter-module waveguide 72 without intermediate interfacing elements 8, 15. The waveguide 72 provides the desired high-speed communication, is easily implemented and in particular embedded in a conventional backplane 14 and can supplement or replace the conventional N-pole connection 13 and bus system 3 (not shown). A typical application is a mother board waveguide backplane 72 providing microwave interconnects 72 between personal computer (PC) modules 20, such as a microprocessor 21, memory 22, I/O cards 23 and peripheral devices 23.

Fig. 10 shows a parallel arrangement of several PCB or MLB backplanes 14, as in Fig. 9, on a rack 16. The rack 16 provides mechanical mounting slots for the PCBs or MLBs and simultaneously serves as a housing for the interconnected microwave waveguides 72. Here the PCBs or MLBs themselves constitute the electronic data processing components or units 2. Thus an extended rack-based waveguide backplane 72 for linking PCBs or MLBs is provided that is well suited for modular industrial computing systems 1. Typical applications are computers 1 for control technology, such as machine, plant, substation or utility control and steering and other purposes.

In a second aspect the invention relates to a data processing device 1, 2 comprising a communication bus 7; 70, 71, 72 as disclosed above. In particular, the data processing device 1, 2 can be a non-monolithic microprocessor 21, a multi chip module 21, 22, a module 21, 22, 23 comprised on a common board 9, a sub-assembly 20 or peripheral device 23 of a computing system 1 or a modular computing system 1, such as a personal or industrial computer system 1 and/or the microwave waveguide 7; 70, 71, 72 of the communication bus 7 is part of a module area network (MAN), a board area network (BAN) or a system area network (SAN). The module area network provides data exchange within a non-monolithic or multi-chip component 21, 22, 23, the board area network between such components 21, 22, 23 mounted on a common board 9 and the system area network between boards 9, such as PCBs 9 or MLBs 9, external components 23, 231, cards 20, 230 or general sub-assemblies 20. In particular, the microwave waveguide 7; 70, 71, 72 can be implemented as a multi-chip-module (MCM) backplane, a PCB or MLB backplane, a computer backplane, an industrial control system backplane or a rack-based backplane.

The waveguide approach can be implemented for the various computing systems layers as outlined above in a very simple and cost efficient way. It combines the advantages of a fiber optical system, i. e. high bandwidth, perfect privacy and immunity to and zero-emission of electromagnetic interference, with those of a conventional conductor-based system, i. e. ease of manufacturing and handling and low cost, and goes beyond both schemes by providing a truly parallel access to the waveguide communication bus 7.

While there are shown and described and pointed out the fundamental novel features of the invention as applied to the preferred embodiment, it will be understood that various omissions and substitutions and changes of the form and details of the device illustrated and in its operation may be made by those skilled in the art, without departing from the spirit of the invention and within the scope and range of equivalents of the claims.

### List of Reference Symbols

- 1: computer, information processing system
- 2: digital data processing unit
- 20: sub-assembly, card
- 21: processor, microprocessor (µP), central processing unit (CPU), multi-chip module
- 210: arithmetic logic unit (ALU), IC-chip
- 211: cash memory, IC-chip
- 22: memory module, multi-chip module
- 220: RAM-chip, IC-chip
- 23: peripheral device, input/output device (I/O)
- 230: Ethernet card
- 231: compact disc drive (CD-drive)
- 3: input/output buffer, conventional bus driver
- 4: conventional bus
- 5: power supply lines
- 6: waveguide bus interface, transceiving means; transmitter, receiver; transceiver
- 60: microwave oscillator, modulator
- 61: microwave demodulator
- 62: internal signaling line
- 7: microwave waveguide, communication bus
- 70: intra-module microwave waveguide
- 71: on-board microwave waveguide
- 72: inter-module (intra-computer) microwave waveguide
- 8: antenna, microwave signal antenna
- 80: microwave power supply antenna
- 9: mounting board, printed circuit board (PCB), multi layer board (MLB); multi-chip module
- 90: top layer
- 91: microwave layer
- 92: bottom layer
- 93: copper coating
- 10: receiving means, slots
- 11: microwave absorber, end piece
- 12: microwave absorbing material, graphite
- 13: N-pole connector
- 14: PCB backplane
- 15: waveguide connector
- 16: rack with integrated waveguide
- 17: microwave signal management means, multiplexing means, frequency multiplexing means

- a, b: width, height of waveguide
- S1-S4: signals
- f1-f4: frequency channels, carrier signals
- X: multiplier
- f1*S1: frequency-modulated signal
- S: compound signal, frequency-multiplexed signal

## Claims

1. A communication bus for transmitting microwave signals (S1, ..., S4), comprising a microwave waveguide (7; 70, 71, 72) linking digital data processing units (2), wherein each processing unit (2) is connected to microwave transceiving means (6) for coupling the microwave signals (S1, ..., S4) into and out of the waveguide (7; 70, 71, 72), wherein
a) each transceiving means (6) comprises a microwave modulator (60) and microwave demodulator (61) and an antenna (8), that are in one piece with the respective processing unit (2), and
b) the waveguide (7; 70, 71, 72) is provided with receiving means (10) for receiving the processing units (2) such that their antennas (8) are coupled to the waveguide (7; 70, 71, 72)
**characterized in that**
c) the data traffic on the waveguide bus (7) is managed by microwave signal management means (17) and
d) the microwave signal management means (17) are implemented in a separate network management unit (17) or are integrated in a processing unit (2).

2. The communication bus according to claim 1, **characterized in that**
a) the microwave signal management means (17) are implemented using programmable software tools and/or
b) the microwave signal management means (17) are multiplexing means (17) and, in particular, frequency multiplexing means (17).

3. The communication bus according to claim 2, **characterized in that**
a) the processing unit (2) is pluggable onto the waveguide (7; 70, 71, 72) and/or
b) the microwave modulator (60) and microwave demodulator (61) are integrated in the processing unit (2) and/or
c) the receiving means (10) are provided at discrete or continuously distributed locations along the waveguide (7; 70, 71, 72).

4. The communication bus according to any of the preceding claims, **characterized in that**
a) the antenna (8) is extending outwardly from the processing unit (2) and is extending, in a mounted state, into the waveguide (7; 70, 71, 72) and/or
b) the antenna (8) is mismatched for extracting only a small portion of microwave signal energy conducted in the waveguide (7; 70, 71, 72) and/or
c) one antenna (8) or few antennas (8) per processing unit (2) are present.

5. The communication bus according to any of the preceding claims, **characterized in that**
a) the transceiving means (6) comprise means for converting digital data signals into broadband-modulated microwave signals (S1, ..., S4) and vice versa and/or
b) the microwave waveguide (7; 70, 71, 72) is a hollow metallic or nonradiative dielectric waveguide (7; 70, 71, 72) transmitting at least one TE- and/or TM-mode and has, in particular, a rectangular, round or coaxial cross section.

6. The communication bus according to any of the preceding claims, **characterized in that**
a) the communication bus comprises frequency multiplexing means (17) to define independent communication channels within the microwave waveguide (7; 70, 71, 72) and
b) in particular that frequencies (f1, ... f4) are allocated to specific signals (S1, ..., S4) and/or to specific transmitting and/or receiving processing units (2) and/or to specific groups of transmitting and receiving processing units (2).

7. The communication bus according to claim 16, **characterized in that**
a) the frequency multiplexing means (17) comprise means for dynamic bandwidth allocation to individual communication channels as a function of a type of signal (S1, ..., S4) or processing unit (2) associated with the communication channel and
b) in particular that large bandwidths, preferably above 100 MHz, are allocated to address-data signals and small bandwidths, preferably below 100 MHz, more preferred below 1 MHz, are allocated to general-purpose signals.

8. The communication bus according to any of the preceding claims, **characterized in that**
a) at least two processing units (2) are IC-chips (210, 211, 220) that are arranged inside a processing or memory module (20, 21, 22, 23), such as a multi-chip module (21), microprocessor (21) or CPU-module (21), and
b) the communication bus comprises an intra-module microwave waveguide (70) connecting the IC-chips (210, 211, 220) inside the processing or memory module (20, 21, 22, 23).

9. The communication bus according to any of the preceding claims, **characterized in that**
a) at least two processing units (2) are or comprise IC-chips (21, 210, 211; 22, 220; 23) that are arranged on a common board (9), such as a printed circuit board (9) or multilayer board (9), and
b) the communication bus comprises an on-board microwave waveguide (71) connecting the IC-chips (21, 210, 211; 22, 220; 23) on the board (9).

10. The communication bus according to any of the preceding claims, **characterized in that**
a) at least two processing units (2) are processing and/or memory modules (21, 22), such as CPU- or RAM-modules (21, 22), and/or peripheral devices (23), such as input/output devices (23), drives (231) or storage devices, which modules (21, 22) and/or devices (23) together belong to or form a modular computer system (1) and
b) the communication bus comprises an inter-module microwave waveguide (72) connecting the processing modules (21), memory modules (22) and/or peripheral devices (23).

11. The communication bus according to any of the preceding claims, **characterized in that**
a) the communication bus comprises a plurality of microwave waveguides (7; 70, 71, 72), preferably interconnected with each other and/or arranged as a backplane on a board (9) comprising the processing units (2), such as a printed circuit board (9), multilayer board (9) or computer mother board (9), and/or
b) the communication bus comprises a multi-layered hierarchy of intra-module waveguides (70) and/or on-board waveguides (71) and/or inter-module waveguides (72), which comprise, in particular, direct waveguide links to transmit microwave signals (S1, ..., S4) between different waveguide layers (70, 71, 72).

12. The communication bus according to any of the preceding claims, **characterized in that**
a) power supply means for the processing units (2) comprise the waveguide (7; 70, 71, 72) as a power transmission medium,
b) in particular that the communication bus comprises means for microwave power supply through the waveguide (7; 70, 71, 72) to the processing units (2) and the processing units (2) comprise antennas (80; 8) for extracting a suitable portion of the microwave power and/or
c) in particular that the waveguide (7; 70, 71, 72) is metallic and forms part of a wire-bound power supply line.

13. The communication bus according to any of the preceding claims, **characterized in that**
a) thermal cooling means for the processing units (2) comprise the waveguide (7; 70, 71, 72) as a heat transmission medium and
b) in particular that the waveguide (7; 70, 71, 72) is metallic and is thermally connected to the processing units (2) and to a heat sink.

14. A data processing device (1,2) comprising a communication bus according to any of the preceding claims.

15. The data processing device (1,2) according to claim 14, **characterized in that**
a) the data processing device (1, 2) is a non-monolithic microprocessor (21), a multi chip module (21, 22), a module (21, 22, 23) comprised on a common board (9), a sub-assembly (20) or peripheral device (23) of a computing system (1) or a modular computing system (1), such as a personal or industrial computer system (1) and/or
b) the microwave waveguide (7; 70, 71, 72) of the communication bus (7) is part of a module area network, a board area network or a system area network.

## Patentansprüche

1. Kommunikationsbus zum Übertragen von Mikrowellensignalen (S1, ..., S4) mit einem Mikrowellen-Wellenleiter (7; 70; 71; 72), der digitale Datenverarbeitungseinheiten (2) verbindet, wobei jede Verarbeitungseinheit (2) mit Mikrowellen-Sende-/Empfangs-Mitteln (6) zum Ein- und Auskoppeln der Mikrowellensignale (S1, ..., S4) in und aus dem Wellenleiter (7; 70, 71, 72) verbunden ist, wobei
a) jedes Sende-/Empfangsmittel (6) einen Mikrowellenmodulator (60) und einen Mikrowellendemodulator (61) und eine Antenne (8) umfaßt, die in einem Stück mit der jeweiligen Verarbeitungseinheit (2) sind, und
b) der Wellenleiter (7; 70; 71; 72) mit Aufnahmemitteln (10) zum Aufnehmen der Verarbeitungseinheiten (2) ausgestattet ist, dergestalt, daß ihre Antennen (8) an dem Wellenleiter (7; 70; 71; 72) angekoppelt werden,
**dadurch gekennzeichnet, daß**
c) der Datenverkehr auf dem Wellenleiterbus (7) durch Mikrowellensignalverwaltungsmittel (17) verwaltet wird und
d) die Mikrowellensignalverwaltungsmittel (17) in einer separaten Netzwerkverwaltungseinheit (17) implementiert sind oder in eine Verarbeitungseinheit (2) integriert sind.

2. Kommunikationsbus nach Anspruch 1, **dadurch gekennzeichnet daß**,
a) die Mikrowellensignalverwaltungsmittel (17) unter Verwendung programmierbarer Softwarewerkzeuge implementiert sind und/oder
b) die Mikrowellensignalverwaltungsmittel (17) multiplexende Mittel (17) und insbesondere frequenzmultiplexende Mittel (17) sind.

3. Kommunikationsbus nach Anspruch 2, **dadurch gekennzeichnet daß**,
a) die Verarbeitungseinheit (2) auf den Wellenleiter (7; 70; 71; 72) aufsteckbar ist und/oder
b) der Mikrowellenmodulator (60) und der Mikrowellendemodulator (61) in die Verabeitungseinheit (2) integriert sind und/oder
c) die Empfangsmittel (10) an diskreten oder kontinuierlich verteilten Stellen auf dem Wellenleiter (7; 70; 71; 72) vorhergesehen sind.

4. Kommunikationsbus nach einem der vorhergehenden Ansprüche, **dadurch gekennzeichnet, daß**
a) sich die Antenne (8) anach außen von der Verarbeitungseinheit (2) erstreckt und sich im angebrachten Zustand in den Wellenleiter (7; 70; 71; 72) hinein erstreckt und/oder
b) die Antenne (8) fehlangepaßt ist, um nur einen kleinen Teil der in dem Wellenleiter (7; 70; 71; 72) geleiteten Mikrowellensignalenergie zu extrahieren und/oder
c) eine Antenne (8) oder einige wenige Antennen (8) pro Verarbeitungseinheit (2) vorliegen.

5. Kommunikationsbus nach einem der vorhergehenden Ansprüche, **dadurch gekennzeichnet, daß**
a) die Sende-/Empfangsmittel (6) Mittel zum Umsetzen digitaler Datensignale in breitbandmodulierte Mikrowellensignale (S1, ... , S4) und umgekehrt umfassen und
b) der Mikrowellen-Wellenleiter (7; 70; 71; 72) ein hohler Metall- oder nichtstrahlender dielektrischer Wellenleiter (7; 70; 71; 72) ist, der mindestens eine TE- und/oder TM-Mode überträgt und insbesondere einen rechteckigen, runden oder coaxialen Querschnitt aufweist.

6. Kommunikationsbus nach einem der vorhergehenden Ansprüche, **dadurch gekennzeichnet, daß**
a) der Kommunikationsbus frequenzmultiplexende Mittel (17) zum Definieren unabhängiger Kommunikationskanäle in dem Mikrowellen-Wellenleiter (7; 70; 71; 72) umfaßt und
b) insbesondere Frequenzen (f1, ..., f4) spezifischen Signalen (S1, ..., S4) und/oder spezifischen Sende- und/oder Empfangsverarbeitungseinheiten (2) und/oder spezifischen Gruppen von Sende- und Empfangsverabeitungseinheiten (2) zugeteilt sind.

7. Kommunikationsbus nach Anspruch 6, **dadurch gekennzeichnet, daß**
a) die frequenzmultiplexenden Mittel (17) Mittel zur dynamischen Bandbreitenzuteilung zu individuellen Kommunikationskanälen als eine Funktion des Typs des Signals (S1, ..., S4) oder der Verarbeitungseinheit (2), der dem Kommunikationskanal zugeordnet ist, umfassen und
b) insbesondere Addressendatensignalen große Bandbreiten, bevorzugt über 100 MHz, zugeteilt werden, und Mehrzweckssignalen kleine Bandbreiten, vorzugsweise weniger als 100 MHz und besonders bevorzugt weniger als 1 MHz zugeteilt werden.

8. Kommunikationsbus nach einem der vorhergehenden Ansprüche, **dadurch gekennzeichnet, daß**
a) mindestens zwei Verarbeitungseinheiten (2) IC-Chips (210, 211, 220) sind, die in einem Verarbeitungs- oder Speichermodul (20, 21, 22, 23), wie zum Beispiel einem Mehrchip-Modul (21), einem Mikroprozessor (21) oder CPU-Modul (21) angeordnet sind, und
b) der Kommunikationsbus einen modulinternen Mikrowellen-Wellenleiter (70) umfaßt, der die IC-Chips (210, 211, 220) in dem Verarbeitungs- oder Speichermodul (20, 21, 22, 23) verbindet.

9. Kommunikationsbus nach einem der vorhergehenden Ansprüche, **dadurch gekennzeichnet, daß**
a) mindestens zwei Verabreitungseinheiten (2) IC-Chips (21, 210, 211; 22, 220; 23) sind oder umfassen, die auf einem gemeinsamen Board (9) wie zum Beispiel einer Leiterplatte (9) oder einem mehrschichtigen Board (9) angeordnet sind, und
b) der Kommunikationsbus einen Onboard-Mikrowellen-Wellenleiter (71) umfaßt, der die IC-Chips (21, 210, 211; 22, 220; 23) auf dem Board (9) verbindet.

10. Kommunikationsbus nach einem der vorhergehenden Ansprüche, **dadurch gekennzeichnet, daß**
a) mindestens zwei Verarbeitungseinheiten (2) Verarbeitungs- und/oder Speichermodule (21, 22) wie zum Beispiel CPU- oder RAM-Module (21, 22) sind, und/oder Peripheriegeräte (23), wie zum Beispiel Eingabe-/Ausgabegeräte (23), Laufwerke (231) oder Speichereinrichtungen, wobei die Module (21, 22) und/oder Einrichtungen (23) zusammen zu einem modularen Computersystem (1) gehören oder dieses bilden und
b) der Kommunikationsbus einen Mikrowellen-Wellenleiter (72) zwischen Modulen umfaßt, der die Verarbeitungsmodule (21), die Speichermodule (22) und/oder die Peripheriegeräte (23) verbindet.

11. Kommunikationsbus nach einem der vorhergehenden Ansprüche, **dadurch gekennzeichnet, daß**
a) der Kommunikationsbus mehrere Mikrowellen-Wellenleiter (7; 70, 71, 72) umfaßt, die vorzugsweise als eine Backplane auf einem Board (9), das die Verarbeitungseinheiten (2), wie etwa eine Leiterplatte (9), ein mehrschichtiges Board (9) oder ein Computer-Motherboard (9) umfaßt, miteinander verbunden und/oder angeordnet sind, und/oder
b) der Kommunikationsbus eine mehrschichtige Hierarchie von modulinternen Wellenleitern (70) und/oder Onboard-Wellenleitern (71) und/oder Wellenleitern (72) zwischen Modulen umfaßt, die insbesondere direkte Wellenleiterverbindungen zum Senden von Mikrowellensignalen (S1, ..., S4) zwischen verschiedenen Wellenleiterschichten (70, 71, 72) umfassen.

12. Kommunikationsbus nach einem der vorhergehenden Ansprüche, **dadurch gekennzeichnet, daß**
a) Stromversorgungsmittel für die Verarbeitungseinheiten (2) den Wellenleiter (7; 70, 71, 72) als Stromübertragungsmedium umfassen,
b) insbesondere, daß der Kommunikationsbus Mittel zur Mikrowellenstromversorgung durch den Wellenleiter (7; 70, 71, 72) für die Verarbeitungseinheiten (2) umfaßt und die Verarbeitungseinheiten (2) Antennen (80; 8) zum Extrahieren eines geeigneten Teils der Mikrowellenleistung umfassen und/oder
c) insbesondere, daß der Wellenleiter (7; 70, 71, 72) metallisch ist und Teil einer drahtgebundenen Stromversorgungsleitung bildet.

13. Kommunikationsbus nach einem der vorhergehenden Ansprüche, **dadurch gekennzeichnet, daß**
a) thermische Kühlmittel für die Verarbeitungseinheiten (2) den Wellenleiter (7; 70, 71, 72) als Wärmeübertragungsmedium umfassen und
b) insbesondere, daß der Wellenleiter (7; 70, 71, 72) metallisch ist und thermisch mit den Verarbeitungseinheiten (2) und einem Kühlkörper verbunden ist.

14. Datenverarbeitungseinrichtung (1, 2) mit einem Kommunikationsbus nach einem der vorhergehenden Ansprüche.

15. Datenverarbeitungseinrichtung (1, 2) nach Anspruch 14, **dadurch gekennzeichnet, daß**
a) die Datenverarbeitungseinrichtung (1,2) ein nichtmonolithischer Mikroprozessor (21), ein Mehrchip-Modul (21, 22), ein Modul (21, 22, 23) bestehend auf einem gemeinsamen Board (9), einer Baugruppe (20) oder einem Peripheriegerät (23) eines Datenverarbeitungssystems (1) oder eines modularen Datenverarbeitungssystems (1), wie zum Beispiel eines persönlichen oder industriellen Computersystems(1), ist und/oder
b) der Mikrowellen-Wellenleiter (7; 70, 71, 72) des Kommunikationsbusses (7) Teil eines Modul-Netzwerks, eines Board-Netzwerks oder eines System-Netzwerks ist.

## Revendications

1. Bus de communication pour transmettre des signaux hyperfréquence (S1, ..., S4), comprenant un guide d'ondes hyperfréquence (7; 70, 71, 72) reliant des unités de traitement de données numériques (2), dans lequel chaque unité de traitement (2) est connectée à des moyens d'émission-réception hyperfréquence (6) pour coupler les signaux hyperfréquence (S1, ..., S4) au guide d'ondes (7 ; 70, 71, 72) et les en découpler, dans lequel
a) chaque moyen d'émission-réception (6) comprend un modulateur hyperfréquence (60) et un démodulateur hyperfréquence (61) ainsi qu'une antenne (8), qui forment un tout avec l'unité de traitement respective (2), et
b) le guide d'ondes (7; 70, 71, 72) est muni de moyens de réception (10) pour recevoir les unités de traitement (2) de telle sorte que leurs antennes (8) soient couplées au guide d'ondes (7; 70, 71, 72),
**caractérisé en ce que**
c) le trafic de données sur le bus de guide d'ondes (7) est géré par des moyens de gestion de signaux hyperfréquence (17) et
d) les moyens de gestion de signaux hyperfréquence (17) sont mis en oeuvre dans une unité de gestion de réseau distincte (17) ou sont intégrés dans une unité de traitement (2).

2. Bus de communication selon la revendication 1,
**caractérisé en ce que**
a) les moyens de gestion de signaux hyperfréquence (17) sont mis en oeuvre au moyen d'outils logiciels programmables et/ou
b) les moyens de gestion de signaux hyperfréquence (17) sont des moyens de multiplexage (17), et en particulier, des moyens de multiplexage de fréquences (17).

3. Bus de communication selon la revendication 2,
**caractérisé en ce que**
a) l'unité de traitement (2) est enfichable sur le guide d'ondes (7 ; 70, 71, 72) et /ou
b) le modulateur hyperfréquence (60) et le démodulateur hyperfréquence (61) sont intégrés dans l'unité de traitement (2) et/ou
c) les moyens de réception (10) sont fournis à des emplacements discrets ou distribués de façon continue le long du guide d'ondes (7 ; 70, 71, 72).

4. Bus de communication selon l'une quelconque des revendications précédentes, **caractérisé en ce que**
a) l'antenne (8) s'étend vers l'extérieur depuis l'unité de traitement (2) et s'étend, dans un état monté, à l'intérieur du guide d'ondes (7 ; 70, 71, 72) et/ou
b) l'antenne (8) est désadaptée pour extraire uniquement une petite partie de l'énergie des signaux hyperfréquence conduite dans le guide d'ondes (7 ; 70, 71, 72) et/ou
c) une antenne (8) ou quelques antennes (8) sont présentes par unité de traitement (2).

5. Bus de communication selon l'une quelconque des revendications précédentes, **caractérisé en ce que**
a) les moyens d'émission-réception (6) comprennent des moyens de conversion de signaux de données numériques en signaux hyperfréquence modulés en bande large (S1, ..., S4) et vice versa et/ou
b) le guide d'ondes hyperfréquence (7 ; 70, 71, 72) est un guide d'ondes diélectrique métallique creux ou non rayonnant (7 ; 70, 71, 72) qui transmet au moins un mode TE et/ou TM et a, en particulier, une coupe transversale rectangulaire, ronde ou coaxiale.

6. Bus de communication selon l'une quelconque des revendications précédentes, **caractérisé en ce que**
a) le bus de communication comprend des moyens de multiplexage de fréquences (17) pour définir des canaux de communication indépendants dans le guide d'ondes hyperfréquence (7 ; 70, 71, 72) et
b) en particulier **en ce que** des fréquences (f1, ... f4) sont allouées à des signaux spécifiques (S1, ..., S4) et/ou des unités de traitement émettrices et/ou réceptrices spécifiques (2) et/ou des groupes spécifiques d'unités émettrices et réceptrices (2).

7. Bus de communication selon la revendication 6,
**caractérisé en ce que**
a) les moyens de multiplexage de fréquences (17) comprennent des moyens d'allocation de bande passante dynamique aux canaux de communication individuels en fonction d'un type de signal (S1, ..., S4) ou d'unité de traitement (2) associé au canal de communication et
b) en particulier **en ce que** de grandes bandes passantes, de préférence de plus de 100 MHz, sont allouées aux signaux de données d'adresse et de petites bandes passantes, de préférence de moins de 100 MHz, d'une façon davantage préférée de moins d'1 MHz, sont allouées aux signaux généraux.

8. Bus de communication selon l'une quelconque des revendications précédentes, **caractérisé en ce que**
a) au moins deux unités de traitement (2) sont des puces de circuit intégré (CI) (210, 211, 220) qui sont agencées à l'intérieur d'un module de traitement ou de mémoire (20, 21, 22, 23), tel qu'un module multipuce (21), un microprocesseur (21) ou un module d'unité centrale (21), et
b) le bus de communication comprend un guide d'ondes hyperfréquence intra-module (70) connectant les puces CI (210, 211, 220) à l'intérieur du module de traitement ou de mémoire (20, 21, 22, 23).

9. Bus de communication selon l'une quelconque des revendications précédentes, **caractérisé en ce que**
a) au moins deux unités de traitement (2) sont ou comprennent des puces CI (21, 210, 211 ; 22, 220 ; 23) qui sont agencées sur une carte commune (9), telle qu'une carte de circuit imprimé (9) ou une carte multicouche (9), et
b) le bus de communication comprend un guide d'ondes hyperfréquence sur carte (71) connectant les puces CI (21, 210, 211 ; 22, 220 ; 23) sur la carte (9).

10. Bus de communication selon l'une quelconque des revendications précédentes, **caractérisé en ce que**
a) au moins deux unités de traitement (2) sont des modules de traitement et/ou de mémoire (21, 22), tels que des modules d'unité centrale ou de RAM (21, 22), et/ou des dispositifs périphériques (23), tels que des dispositifs d'entrée/sortie (23), des lecteurs (231) ou des dispositifs de mémorisation, lesquels modules (21, 22) et/ou dispositifs (23) appartiennent ensemble à un système informatique modulaire (1) ou composent celui-ci et
b) le bus de communication comprend un guide d'ondes hyperfréquence inter-modules (72) qui connecte les modules de traitement (21), modules de mémoire (22) et/ou dispositifs périphériques (23).

11. Bus de communication selon l'une quelconque des revendications précédentes, **caractérisé en ce que**
a) le bus de communication comprend une pluralité de guides d'ondes hyperfréquence (7 ; 70, 71, 72), de préférence interconnectés les uns avec les autres et/ou agencés en fond de panier sur une carte (9) comprenant les unités de traitement (2), telle qu'une carte de circuit imprimé (9), une carte multicouche (9) ou une carte mère informatique (9) et/ou
b) le bus de communication comprend une hiérarchie disposée en couches multiples de guides d'ondes intra-module (70) et/ou de guides d'ondes sur carte (71) et/ou de guides d'ondes inter-modules (72), lesquels comprennent, en particulier, des liaisons directes de guides d'ondes pour transmettre des signaux hyperfréquence (S1, ..., S4) entre différentes couches de guides d'ondes (70, 71, 72).

12. Bus de communication selon l'une quelconque des revendications précédentes, **caractérisé en ce que**
a) des moyens d'alimentation des unités de traitement (2) comprennent le guide d'ondes (7 ; 70, 71, 72) comme milieu de transmission de puissance,
b) en particulier **en ce que** le bus de communication comprend des moyens d'alimentation hyperfréquence par le biais du guide d'ondes (7 ; 70, 71, 72) jusqu'aux unités de traitement (2) et les unités de traitement (2) comprennent des antennes (80 ; 8) pour extraire une partie convenable de la puissance hyperfréquence et/ou
c) en particulier **en ce que** le guide d'ondes (7 ; 70, 71, 72) est métallique et fait partie d'une ligne d'alimentation microcâblée.

13. Bus de communication selon l'une quelconque des revendications précédentes, **caractérisé en ce que**
a) des moyens de refroidissement thermique des unités de traitement (2) comprennent le guide d'ondes (7 ; 70, 71, 72) comme milieu de transmission de chaleur et
b) en particulier **en ce que** le guide d'ondes (7 ; 70, 71, 72) est métallique et connecté thermiquement aux unités de traitement (2) et à un dissipateur thermique.

14. Dispositif de traitement de données (1, 2) comprenant un bus de communication selon l'une quelconque des revendications précédentes.

15. Dispositif de traitement de données (1, 2) selon la revendication 14, **caractérisé en ce que**
a) le dispositif de traitement de données (1, 2) est un micro-processeur non monolithique (21), un module multipuce (21, 22), un module (21, 22, 23) compris sur une carte commune (9), un sous-ensemble (20) ou un dispositif périphérique (23) d'un système informatique (1) ou d'un système informatique modulaire (1), tel qu'un système informatique personnel ou industriel (1) et/ou
b) le guide d'ondes hyperfréquence (7 ; 70, 71, 72) du bus de communication (7) fait partie d'un réseau de modules, d'un réseau de cartes ou d'un réseau de systèmes.
